# FASCICULE DE BREVET EUROPEEN

(11) **EP 1 733 160 B1**
(45) Date de publication et mention de la délivrance du brevet: **23.01.2008**
(21) Numéro de dépôt: 05740714.0
(22) Date de dépôt: 01.03.2005
(51) Int. Cl.: F16K 11/07, A61M 16/20

(54) **VALVE DE DISTRIBUTION ET REGULATION DE FLUIDE ET UTILISATION POUR LA FOURNITURE D'AIR ENRICHI AUX OCCUPANTS D'UN AERONEF**
FLUIDABGABE UND -REGULIERVENTIL UND DESSEN VERWENDUNG ZUR ZUFÜHRUNG VON ANGEREICHERTER LUFT ZU FLUGZEUGPASSAGIEREN
FLUID DISPENSING AND REGULATING VALVE AND USE THEREOF FOR SUPPLYING ENRICHED AIR TO AN AIRCRAFT PASSENGERS

(30) Priorité: 26.03.2004 FR 0450605
(43) Date de publication de la demande: 20.12.2006
(73) Titulaire: L'AIR LIQUIDE, Société Anonyme pour l'Etude et l'Exploitation des Procédés Georges Claude, 75007 Paris (FR)
(72) Inventeur: ARNAULT, Jean, F-38330 Saint Nazaire Les Eymes (FR); LESSI, Stéphane, 19711 Newark, DE (US)
(74) Mandataire: De Cuenca, Emmanuel Jaime
(86) Numéro de dépôt international: PCT/FR2005/050131
(87) Numéro de publication internationale: WO 2005/093301

(56) Documents cités:
- WO-A-20/04031631
- FR-A- 1 332 592
- GB-A- 1 589 042
- US-A- 3 411 538
- US-A- 4 267 862

## Description

La présente invention concerne les valves de distribution et de régulation de fluide, du type comprenant un corps de valve définissant au moins deux paires de chambres connectables chacune à un circuit de fluide extérieur, et une structure mobile déplaçable par des moyens de commande pour établir sélectivement une communication de fluide entre au moins deux des chambres, notamment pour système embarqué de fourniture de gaz respiratoire enrichi en oxygène à au moins un occupant d'un aéronef.

Une valve de ce type est décrite dans le document WO-A-2004/031631 au nom de la demanderesse et dans le document US-A-3 411 538.

La présente invention a pour objet de proposer une valve de distribution et de régulation de fluide améliorée, à sécurité accrue et de faibles coûts de construction et d'utilisation.

Pour ce faire, selon un aspect de l'invention, la structure mobile forme un passage intérieur traversant définissant, à une extrémité, une portée intérieure d'extension réduite coopérant à coulissement avec une tête de piston stationnaire et déplaçable au-delà, de part et d'autre, de ladite tête de piston dans des positions extrêmes de la structure de piston pour mettre en communication le passage intérieur avec une chambre d'extrémité du corps de valve, typiquement pour relier les chambres d'extrémités entre elles.

Selon d'autres caractéristiques de l'invention,
- la structure de valve, avantageusement à déplacement linéaire, comprend deux parties creuses sollicitées l'une par rapport à l'autre par des moyens élastiques, les moyens de commande comprenant une tige s'étendant dans une desdites parties creuses et terminée par une tête interposée entre les extrémités en regard des deux parties creuses, sur laquelle prennent avantageusement appui les moyens élastiques ;
- la valve comprend deux paires de trois chambres disposées de part et d'autre, avantageusement symétriquement, d'une chambre médiane ;
- chaque groupe de trois chambres et connectable à un adsorbeur de séparation de constituants de l'air, la chambre médiane de la valve étant connectable à une source d'air sous pression.

La présente invention concerne également l'utilisation d'une telle valve pour la fourniture d'air enrichi en oxygène à au moins un occupant d'un aéronef.

On comprendra que l'invention propose une valve de distribution et de régulation, utilisable notamment avec un concentrateur d'oxygène de type PSA à deux adsorbeurs et permettant d'y assurer, avec un seul moteur, les fonctions de distribution et d'élution. De plus, l'agencement selon l'invention assure, en cas de besoin, une fonction de fermeture automatique au gaz d'entrée, les ressorts de rappel sollicitant les parties creuses de la structure mobile exerçant leur effort en cas de coupure accidentelle de l'alimentation électrique du distributeur et ramenant automatiquement la structure mobile en position centrale d'obturation, procurant ainsi une sécurité accrue en utilisation.

D'autres caractéristiques et avantages de la présente invention ressortiront de la description suivante d'un mode de réalisation, donné à titre illustratif mais nullement limitatif, faite en relation avec le dessin annexé sur lequel :

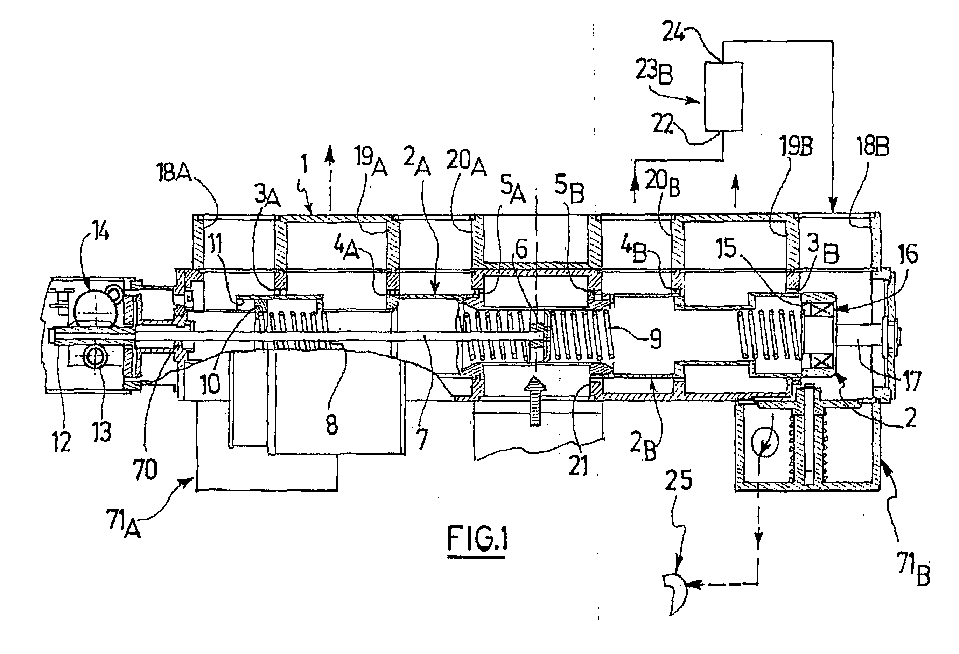

- la figure 1 est une vue schématique, partiellement en coupe longitudinale, d'un mode de réalisation d'une valve de distribution et de régulation selon l'invention.

Dans le mode de réalisation représenté sur la figure 1, une valve selon l'invention comprend un corps de valve 1, typiquement de configuration générale cylindrique, dans lequel sont ménagées une multiplicité de chambres séparées les unes des autres par des cloisons transversales parallèles munies d'orifices traversants alignés avec l'axe du corps de valve et sélectivement obturables ou non par une structure de tiroir de valve désignée généralement par la référence 2.

Plus spécifiquement, comme représenté sur la figure 1, la structure de tiroir 2 comprend deux parties creuses tubulaires agencées bout-à-bout 2A,2B, chaque partie creuse définissant extérieurement deux portées de diamètre élargi coopérant de manière étanche avec les orifices de cloisons 3A,4A,5A,3B,4B,5B, respectivement. La structure de tiroir 2A,2B est actionnable par une tête de piston 6, typiquement de forme tubulaire avec une cloison perforée centrale, montée à l'extrémité d'une tige de piston 7 s'étendant coaxialement dans la partie creuse 2A et rendue prisonnière entre les extrémités en regard des deux parties creuses 2A,2B. Ces dernières sont sollicitées symétriquement chacune par un ressort 8,9 prenant appui sur une bague d'extrémité telle que 10 elle-même portant en appui contre une butée radiale intérieure telle que le circlips 11. L'extrémité de la tige 7 opposée à la tête de piston 6, faisant saillie de façon étanche via un joint 70 au-delà du corps de valve 1, comporte un engrenage hélicoïdal 12 coopérant avec une roue dentée 13 actionnée par un servo-moteur électrique pas à pas 14 associé au moins à un détecteur de position de la roue dentée 13 et/ou de la tige 7.

Selon un aspect de l'invention, une des parties creuses, en l'occurrence la partie 2B sur la figure 1, comporte à son extrémité libre une portée cylindrique intérieure 15 de courte extension axiale coopérant à coulissement étanche avec une tête stationnaire 16 montée à l'extrémité d'une tige 17 solidaire de la paroi d'extrémité fermant le corps de valve 1 et s'étendant axialement dans la partie creuse 2B.

La tête 16 se situe dans une chambre d'extrémité 18B formée dans le corps 1 et séparée par la portée 3B, d'une chambre intermédiaire 19B, elle-même séparée, par la portée 4B, d'une chambre centrale 20B.

De façon symétrique, l'extrémité libre de la partie creuse 2A s'étend dans une chambre d'extrémité 18A adjacente à une chambre intermédiaire 19A, elle-même adjacente à une chambre centrale 20A. Les chambres centrales 20A,20B sont séparées, par les portées 5A,5b respectivement, d'une chambre médiane 21 dans laquelle se situe la tête de piston 6. La chambre d'extrémité 18A communique avec l'intérieur de la partie creuse 2A.

On comprendra qu'avec l'agencement qui vient d'être décrit, un déplacement sélectif, sous l'action du servo-moteur 14, de la structure mobile 2 permet non seulement d'établir, avantageusement progressivement, des passages entre les chambres de chaque groupe 18-19-20 et/ou la chambre médiane 21 mais également, lorsque la portée intérieure 15 dépasse à gauche ou à droite la tête 16, d'établir une communication entre les chambres d'extrémité 18A,18B par le passage intérieur défini par la structure de tiroir mobile creuse 2.

De plus, en cas d'inactivation accidentelle ou volontaire du moteur 14, la structure de tiroir 2 retrouve automatiquement la configuration centrée « tout fermé » représentée sur la figure 1 sous l'effet des ressorts antagonistes 8 et 9.

Dans l'application, selon un aspect particulier de l'invention, à la distribution de flux de fluides d'un concentrateur d'oxygène PSA à deux adsorbeurs opérant en alternance, dont un seul (23B) est représenté sur la figure la chambre médiane 21 est reliée à une source l'alimentant en air sous pression (compresseur de moteur ou indépendant), comme illustré par la flèche grisée et la chambre adjacente 20B est reliée à l'entrée d'air 22 d'un adsorbeur 23B, contenant typiquement au moins un matériau particulaire de séparation de constituant de l'air, avantageusement une zéolite X, dont la sortie de production d'oxygène 24 est reliée à la chambre d'extrémité 18B, elle-même reliée, comme illustré par la flèche en pointillés, via un boîtier 71 B de clapet anti-retour, à une ligne d'alimentation d'au moins un masque à oxygène de passager ou membre d'équipage tel que 25. La chambre intermédiaire 19B (comme la chambre symétrique 19A) est reliée en phase de régénération à une ligne (non représentée) d'évacuation vers l'atmosphère du mélange gazeux enrichi en azote.

Ainsi, avec le système de dépassement de la tête 16 décrit plus haut, l'agencement selon l'invention permet, avec un seul moteur 14, d'adjoindre à la phase normale de production, avec fourniture au masque 25, d'oxygène enrichi une phase finale de production dans un adsorbeur avec élution simultanée de l'autre adsorbeur avec une partie du gaz de production transitant dans la structure de tiroir 2 et regagnant la chambre d'extrémité (de production) axialement opposée pour atteindre la sortie de l'adsorbeur en phase de régénération et éluer ce dernier avant qu'il ne repasse en phase de production.

Quoique l'invention ait été décrite en relation avec un mode de réalisation particulier, elle ne s'en trouve pas limitée mais est susceptible de modifications et de variantes qui apparaîtront à l'homme de métier dans le cadre des revendications ci-après.

## Revendications

1. Valve de distribution et de régulation de fluide, comprenant un corps de valve (1) définissant au moins deux paires de chambres (19A, 20A; 19B, 20B) connectables chacune à un circuit de fluide extérieur, et une structure mobile (2A, 2B) déplaçable par des moyens de commande pour établir sélectivement une communication de fluide entre les chambres (19A, 20A; 19B, 20B), **caractérisée en ce que** la structure mobile (2) forme un passage intérieur traversant définissant, à une extrémité, une portée intérieure (15) d'extension réduite coopérant à coulissement avec une tête de piston stationnaire (16) et déplaçable au-delà, de part et d'autre, de ladite tête de piston dans des positions extrêmes de la structure mobile pour mettre en communication le passage intérieur avec une chambre d'extrémité (18B) du corps de valve (1).

2. Valve selon la revendication 1, **caractérisée en ce que** la structure mobile (2) comprend deux parties (2A,2B) sollicitées à l'écart l'une de l'autre par des moyens élastiques (8,9), les moyens de commande comprenant une tige (7) s'étendant dans une des parties (2A) et terminée par une tête (6) interposée entre les extrémités en regard des deux parties (2A,2B).

3. Valve selon l'une des revendications précédentes, **caractérisée en ce qu'**elle comprend deux paires de trois chambres (18A,19A,20A ; 18B,19B,20B) disposées de part et d'autre d'une chambre médiane (21).

4. Valve selon la revendication 3, **caractérisée en ce que** chaque groupe de trois chambres est connectable à un adsorbeur (23B) de séparation de constituants de l'air, la chambre médiane (21) étant connectable à une source d'air sous pression.

5. Valve selon la revendication 4, **caractérisée en ce que** chaque groupe de trois chambres comprend une chambre d'extrémité (18A,18B) reliée à la sortie de production (24) de l'adsorbeur associé (23).

6. Valve selon l'une des revendications précédentes, **caractérisée en ce que** la structure mobile (2) est déplaçable linéairement.

7. Utilisation d'une valve selon l'une des revendications 4 à 6 à la fourniture d'air enrichi en oxygène à au moins un occupant d'un aéronef.

## Claims

1. Fluid distribution and control valve, comprising a valve body (1) delimiting at least two pairs of chambers (19A, 20A; 19B, 20B) each connectable to an external fluid circuit, and a mobile structure (2A, 2B) that can be moved by operating means in order to selectively establish fluid communication between the chambers (19A, 20A; 19B, 20B), **characterized in that** the mobile structure (2) forms an internal-through passage delimiting, at one end, an inner portion (15) of reduced extension interacting by sliding with a stationary piston head (16) and movable beyond said piston head in both directions into end positions of the mobile structure in order to bring the internal passage into communication with an end chamber (18B) of the valve body (1).

2. Valve according to Claim 1, **characterized in that** the mobile structure (2) comprises two parts (2A, 2B) stressed in directions away from each other by resilient means (8, 9), the operating means comprising a rod (7) extending into one of the parts (2A) and terminating in a head (6) interposed between the facing ends of the two parts (2A, 2B).

3. Valve according to either of the preceding claims, **characterized in that** it comprises two pairs of three chambers (18A, 19A, 20A; 18B, 19B, 20B) positioned on either side of a median chamber (21).

4. Valve according to Claim 3, **characterized in that** each group of three chambers is connectable to an adsorber (23B) for separating the constituents of the air, the median chamber (21) being connectable to a source of pressurized air.

5. Valve according to Claim 4, **characterized in that** each group of three chambers comprises an end chamber (18A, 18B) connected to the production outlet (24) of the associated adsorber (23).

6. Valve according to in one of the preceding claims, **characterized in that** the mobile structure (2) can move linearly.

7. Use of a valve according to one of Claims 4 to 6 for the supply of oxygen-enriched air to at least one occupant of an aircraft.

## Patentansprüche

1. Fluidabgabe- und Regelventil, das einen Ventilkörper (1), der mindestens zwei Paare von Kammern (19A, 20A; 19B, 20B) definiert, die je mit einem externen Fluidkreislauf verbunden werden können, und eine bewegliche Struktur (2A, 2B) aufweist, die von Steuermitteln bewegt werden kann, um selektiv eine Fluidverbindung zwischen den Kammern (19A, 20A; 19B, 20B) herzustellen, **dadurch gekennzeichnet, dass** die bewegliche Struktur (2) einen inneren durchgehenden Durchgang bildet, der an einem Ende eine innere Lagerfläche (15) von geringer Ausdehnung definiert, die gleitend mit einem ortsfesten Kolbenkopf (16) zusammenwirkt und zu beiden Seiten über den Kolbenkopf hinaus in Endstellungen der beweglichen Struktur verschiebbar ist, um den inneren Durchgang mit einer Endkammer (18B) des Ventilkörpers (1) in Verbindung zusetzen.

2. Ventil nach Anspruch 1, **dadurch gekennzeichnet, dass** die bewegliche Struktur (2) zwei Teile (2A, 2B) aufweist, die von elastischen Mitteln (8, 9) in Abstand zueinander beaufschlagt werden, wobei die Steuermittel eine Stange (7) aufweisen, die sich in einem der Teile (2A) erstreckt und in einem Kopf (6) endet, der zwischen den einander gegenüberliegenden Enden der zwei Teile (2A, 2B) liegt.

3. Ventil nach einem der vorhergehenden Ansprüche, **dadurch gekennzeichnet, dass** es zwei Paare von drei Kammern (18A, 19A, 20A; 18B, 19B, 20B) aufweist, die zu beiden Seiten einer mittleren Kammer (21) angeordnet sind.

4. Ventil nach Anspruch 3, **dadurch gekennzeichnet, dass** jede Gruppe von drei Kammern mit einem Adsorber (23B) zur Trennung von Bestandteilen der Luft verbunden werden kann, wobei die mittlere Kammer (21) mit einer Druckluftquelle verbunden werden kann.

5. Ventil nach Anspruch 4, **dadurch gekennzeichnet, dass** jede Gruppe von drei Kammern eine Endkammer (18A, 18B) aufweist, die mit dem Produktionsausgang (24) des zugehörigen Adsorbers (23) verbunden ist.

6. Ventil nach einem der vorhergehenden Ansprüche, **dadurch gekennzeichnet, dass** die bewegliche Struktur (2) linear verschiebbar ist.

7. Verwendung eines Ventils nach einem der Ansprüche 4 bis 6 zur Lieferung von sauerstoffangereicherter Luft an mindestens einen Passagier eines Luftfahrzeugs.
